Europäisches Patentamt

European Patent Office

Office européen des brevets

(11) Publication number: **0 024 800**
A1

## (12) EUROPEAN PATENT APPLICATION

(21) Application number: **80302398.5**

(22) Date of filing: **17.07.80**

(51) Int. Cl.³: **G 11 B 5/70**
**G 11 B 5/84, G 06 K 19/08**

(30) Priority: **04.08.79 GB 7927251**

(43) Date of publication of application:
**11.03.81 Bulletin 81/10**

(84) Designated Contracting States:
**CH DE FR GB LI**

(71) Applicant: **EMI Limited**
**Blyth Road**
**Hayes Middlesex,UB3 1BP(GB)**

(72) Inventor: **Lee, Cyril Arthur**
**"Greenfields" Bottle Lane**
**Littlewick Green Berkshire(GB)**

(74) Representative: **Marsh, Robin Geoffrey**
**EMI Limited Blyth Road**
**Hayes Middlesex, UB3 1BP(GB)**

(54) Security document and system.

(57) In a stored value security document and -system, the secure document comprises a support (16) bearing a layer (15) of anisotropic magnetic particles. In distinct regions (17,18) of the layer (15) the particles are aligned along a preset direction and in the remaining regions are not so aligned or are aligned along a different preset direction. Each region or group of regions is assigned a unit of value and overlaying the region or group of regions there is at least one magnetic marking (19). The structured layer (15) is initially magnetised, one at least of the markings (19) being unmagnetised, so that subsequent remagnetisation also results in the magnetisation of a marking or markings thereby indicating the cancellation of a respective unit of value. The system includes an apparatus for effecting the cancellation.

FIG. 1a

FIG. 1b

0024800

## SECURITY DOCUMENT AND SYSTEM

This invention relates to secure documents and secure document systems. Secure documents such as bank notes, cheques, credit cards, tickets, or cash dispenser cards commonly include a security feature which provides an indication of its validity and/or value.

An example of such a document is described in our UK PS 1331604 in which the security feature is provided by a fixed pattern of remanent magnetisation. In some regions of the document, anisotropic magnetic particles are fixedly aligned in a binder substantially along a preset direction and the particles in other regions are not so aligned or are aligned along a substantially different preset direction. The pattern of remanent magnetisation which is revealed by uniaxial magnetisation of the document by application thereto of a suitable "developing" magnetic field, may be temporarily erased using an A.C. erase field but may then be easily restored by uniaxial remagnetisation. In this respect, the security feature provided by the relative orientations of the fixedly aligned particles is permanent and can only be destroyed if the document itself is destroyed. Hitherto, the permanent cancellation of the whole or a part of a security document of this type to indicate for example, a transaction or a payment for a journey, has been achieved by punching out or overstamping the relevant part of the document. Such techniques, however, prove to be unreliable since the document may be distorted and debris may be released making an accurate reading of the remaining remanence pattern difficult or impossible.

Our copending UK PA 51625/76 provides an improved stored value system in which the permanent cancellation of a region may be achieved by the application thereto of a uniaxial d.c. magnetising field. In this technique the particles in each region of the security feature are initially magnetised solely along their direction of alignment, i.e. along their easy axes of magnetisation. The difference in the remanent magnetisation between neighbouring regions of differently aligned particles is relatively high but this difference is reduced if a uniaxial "developing" field is applied so that the particles in some of the regions also become magnetised along a direction other than their easy axes of magnetisation. Cancellation is detected as a change in the remanence difference signal.

It is an object of the present invention to provide a further improved stored value system.

According to one aspect of the invention there is provided a secure document system comprising a secure document including a magnetic material for representing discrete units of value and an apparatus suitable for cancelling one or more of said units by application thereto of a d.c. magnetising field, wherein the secure document comprises a layer of anisotropic magnetic particles dispersed in and retained by a binder, particles in first spaced parts of the layer being fixedly aligned along a first direction and particles in remaining parts of the layer being unaligned or being aligned along a different direction, which layer is magnetised so that a change of remanent magnetisation occurs at the transition between each adjacent pair of first and remaining parts, the region between preselected said transitions representing a unit of value and the magnetised layer also including, at a surface thereof, spaced markings of a magnetic material at least one of said markings being located between each pair of adjacent preselected transistions, and wherein the apparatus comprises a reader means for detecting a change of remanent magnetisation along the

**0024800**

document' and for generating first signals indicative thereof, means for receiving said first signals and for generating further signals whenever consecutive first signals are generated by said preselected transitions thereby indicating that the intervening region is uncancelled and write means and an associated control means responsive to said further signals for magnetising a preselected number of said uncancelled regions to thereby effect their cancellation.

Each said part may represent a unit of value; alternatively each successive pair of adjacent parts may represent a unit of value. The parts may be of substantially the same shape and size. The markings may be elongate strips. The anisotropic magnetic particles may be of $\gamma$ ferric oxide, or barium ferrite or iron powder. The first and different directions may be inclined orthogonally. The means for generating the further signals may be a monostable circuit which is triggered to generate a pulse whenever the interval between consecutively received signals equals the interval between adjacent preselected transitions or differs therefrom by less than the spacing of the markings.

The control means may be a counter means for permitting energisation of the write means until a preset number of said pulses has been received, to thereby cancel the units of value corresponding thereto.

The particles aligned along said first direction may be substantially solely magnetised along said first direction and the particles aligned along said different direction may be substantially solely magnetised along said different direction, and the said apparatus may include a comparator means connected to the output of said reader means, for detecting a change in the level of remanent magnetisation of a unit before and after magnetisation and for providing an indication of said change.

According to another aspect of the invention there is provided a secure document including a magnetic material, for representing a unit of value and comprising a layer of anisotropic magnetic particles dispersed in, and retained by a binder, particles in first spaced parts of the layer being fixedly aligned along a first direction and particles in remaining parts of the layer being unaligned, or being aligned along a different direction, which layer is magnetised so that a change of remanent magnetisation occurs at the transition between each adjacent pair of first and remaining parts , the region between preselected transitions representing a unit of value and the magnetised layer including at a surface thereof, spaced markings of a magnetic material at least one of said markings being located between each pair of adjacent preslected transitions.

In order that the invention may be more readily understood and carried into effect a specific embodiment will be described by way of example only with reference to the accompanying drawings of which,

Figure 1a illustrates a security document in accordance with one example of the present invention,

Figure 1b illustrates a detailed view of part of the security layer of the document,

Figure 2 illustrates a circuit which can be used to read the security document to effect cancellation of a part thereof,

Figures 3a to 3g illustrate signals which are generated at particular positions in the circuit of Figure 2a,

and Figure 4 illustrates a typical coding scheme which is suitable for use in the present arrangement.

Referring to Figure 1a, the security document in accordance with one example of the present invention is illustrated generally at, 10, and is comprised of a security element, 11, containing anisotropic magnetic material, which is mounted on a stiff support member 12 typically made of a plastics material such as PVC.  Printed indicia, 13, and a magnetic medium, 14, for recording temporary information, may also be provided on the support.

The element, 11, is structured in such a way that distinct identifiable regions are produced.  Each region or group of regions can be assigned a unit of value (e.g. a unit of monetary value, a payment for a journey, or a quantity of petrol, say) and the cancellation of a region or group of regions, indicates the exhaustion of that value and prevents its reuse. The technique adopted to achieve cancellation is described in detail below.

The element, 11, may also be used to carry security information (e.g. a verification code, a company number or the date of issue or expiry of the document).

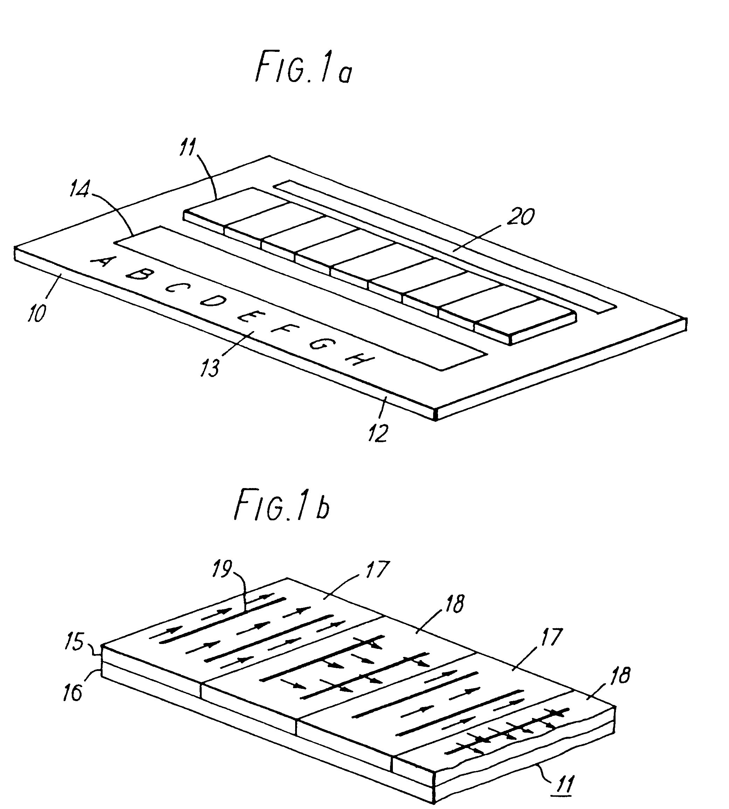

The security element, 11, is shown in detail in Figure 1b and is formed of a layer, 15, typically 12 microns thick, of anisotropic magnetic particles dispersed in a resin binder which is supported on a strip, 16, of a plastics foil such as MYLAR (RTM). In the present arrangement the particles are of $\gamma$ ferric oxide although it will be appreciated that other anisotropic magnetic particles such as chrominum dioxide or barium ferrite or iron powders, could be used.

In spaced regions, 17, of the layer, 15, the magnetic particles are fixedly aligned across the strip, 16, whilst in the remaining regions, 18, the particles are fixedly aligned along the strip. The alignments of particles in the two sets of regions, 17 and 18, are represented in Figure 1b by the directions of the arrows within the respective regions. A structured layer of this kind is formed by prealigning the particles using a magnetic field oriented across the strip, 16. Before the binder sets, the particles are selectively realigned using magnetic fields which are oriented along the strip to thereby form the regions, 17 and 18. It will be appreciated, however, that other arrangements having different alignment directions could be adopted.

In the present invention the layer, 15, is magnetised. This may be achieved during the formation of the layer in which case the particles within each region are magnetised solely along their respective alignment directions, but in another example the layer, following its formation, is demagnetised and then uniaxially remagnetised (a procedure sometimes referred to as "development") along the length of the strip, 16, say.

After formation of the magnetised layer, 15, unmagnetised markings, 19, of a magnetic material are applied to its surface, and in the present example the markings take the form of narrow bars or strips about 4 microns thick which lie across the regions 17 and 18.

Since the markings are initially unmagnetised, a reading device, which is sensitive to a change of remanent magnetisation, generates a signal only when a transition between neighbouring regions 17 and 18 (which have different remanent magnetisations) is detected. Cancellation of a region or a group of regions, therefore, can be achieved by application thereto of a d.c. magnetising field so that the hitherto unmagnetised markings, 19, associated with that region or groups of regions, now become magnetised. On a subsequent reading, therefore, the flux transitions due to the now magnetised markings are detected. This increase in the frequency of detected flux transitions indicates that the region has been cancelled. An attempt to refresh the document by demagnetising the markings will prove to be unsuccessful since the remanent magnetisation due to the regions, 17 and 18, is also erased, and remagnetisation of the regions (to restore the document to its full value) would also cause remagnetisation of the markings.

In the present arrangement the regions, 17 and 18, are uniformly spaced and provide 20 flux reversals per inch (FRPI). The markings, 19, are also uniformly spaced at the surface of the layer, 15, and when magnetised provide four flux reversals for each of the flux reversals due to the regions 17 and 18 alone. The markings are applied to the layer, 15, by a gravure printing process using an 80 line per inch cylinder although alternatively, however, a screen printing technique could be used.

Clearly the markings may take alternative forms, and, for example, dots or squares could be used. The markings may have a different frequency (between 10 and 100 lines per inch, say) and may be arranged randomly, or alternatively they may be spaced to carry coded information.

In order to achieve cancellation, however, it is necessary in the present invention that at least one unmagnetised marking should be associated with each region or group of regions to which a unit of value has been assigned. In the example which is described below a unit of value is designated by a pair of adjacent regions, one of the regions being of the type, 17, and the other of the type, 18.

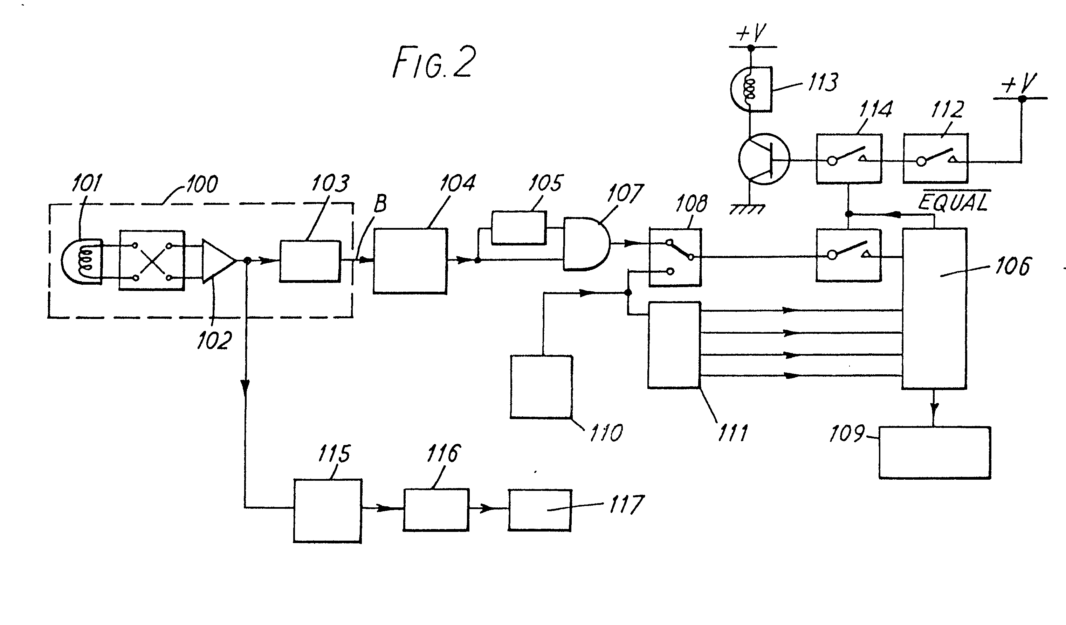

The circuit of Figure 2 provides a means for reading the document to determine its current value (i.e. in this case the number of uncancelled pairs of adjacent regions) and is also used to selectively cancel one or more units, as desired, by the application thereto of a d.c. magnetic field.

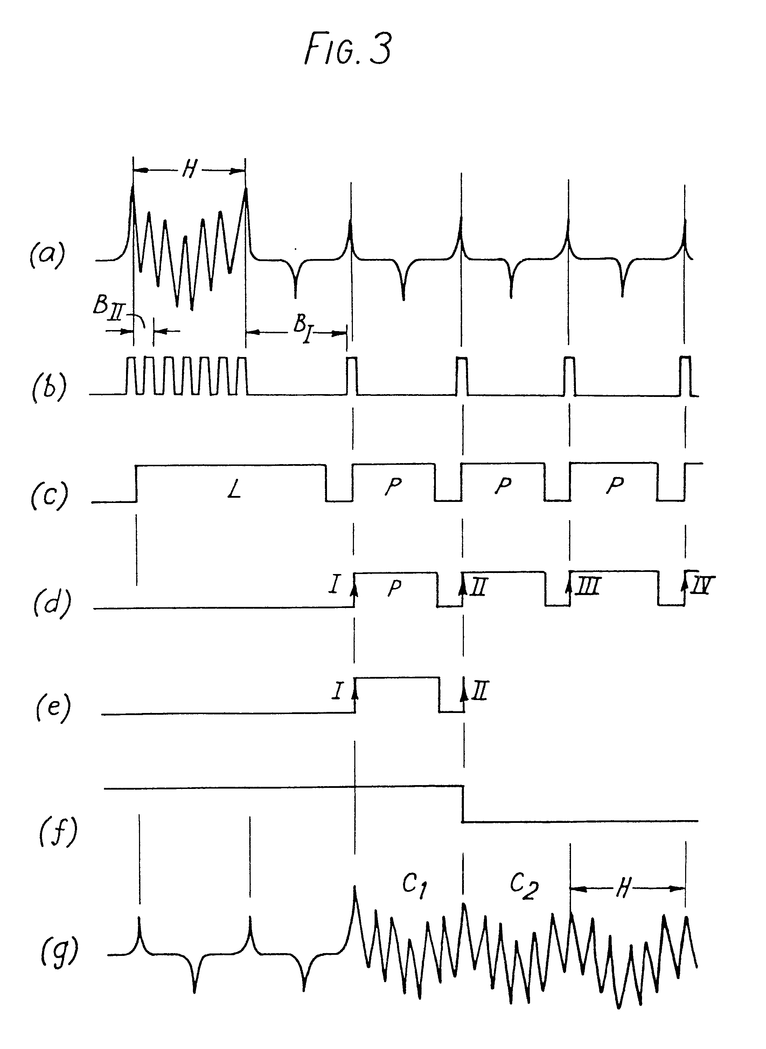

In the reading mode a magnetic reader, 100, reads the document and geneates a pulse only when a positive going transition (i.e. a transition from a region of relatively low remanent magnetisation to a region of relatively high remanent magnetisation) is detected in the security layer, 15. The reader, 100, includes a read head, 101, which is sensitive to changes of remanent magnetisation and which in the present arrangment is a flux rate of change head. Alternatively a flux sensor (e.g. a magneto resistive head) may be used in conjunction with a differentiating circuit. The read head, 101, generates a signal wherever a flux transition is detected, and these signals are amplified at 102, to generate a signal of the form shown in Figure 3a. The higher frequency signals shown in the region, H, of Figure 3a are produced by the flux transitions due to the magnetised markings, 19, and indicate that the unit represented by the region H has been cancelled. (It will be noticed that the width of the region, H, is equal to two regions, 17 and 18.) The amplified signals are then passed to a comparator, 103, which produces a positive going pulse wherever a positive going flux transition is detected, and the output from the comparator is shown in Figure 3b. Since in the described example each unit of value is comprised of two adjacent regions of the document, the interval, $B_I$, between the successive positive going pulses indicates the presence of an uncancelled unit. In contrast, however, when a unit has been cancelled, by the magnetisation of the markings, 19, associated with that unit, a smaller interval, $B_{II}$, occurs between successive pulses.

In this arrangement the output signals, B, from the reader, 100, are passed to a retriggerable monostable, 104, which is set to produce an output pulse wherever the interval between successively received pulses is no less than $0.75B_I$ and is retriggered if a positive going pulse (resulting from a magnetised magnetic marking, 19, for example) interupts this interval. The monostable, 104, therefore, which has an input of the form indicated by Figure 3b generates an output signal of the form indicated in Figure 3c, and pulses, P, are generated whenever an uncancelled unit of value is detected, i.e. whenever pulses having the width, $B_I$, are detected. If a cancelled unit is detected, however, the monostable, 4, is retriggered and a level output signal indicated by the region ,L, in Figure 3c is generated.

The pulses generated by the monostable, 104, are clocked by a shift register, 105, to a counter, 106, via an AND gate, 107, and a solid state switch, 108. The input to the circuit, 106, is shown in Figure 3d, and the positive going pulses I to IV, which indicate the presence of four uncancelled units, are counted and the total is displayed at a numeric display unit, 109, so indicating the current value of the doument.

To effect cancellation of a desired number of units, (the cancellation of two units shall be considered in this description) a further monostable, 110, is set to generate two pulses. As will be apparent to a person skilled in the art an error signal may be generated if the value which is set exceeds the current value of the document, indicated by the display unit, 109. The counter, 106, is now set to count down and is connected to the monostable, 110, via the solid state switch, 108, so that the number currently indicated by the display unit, 109, is decremented by two units. The pulses from monostable, 110, are also passed to a Binary Coded Decimal counter, 111, and after the counter, 106, and the shift register, 105, have been reset the number stored in counter, 111, is loaded into the counter, 106. The counter, 106, is again set to count up and is reconnected to the read head, 101, via the solid state switch, 103. A second solid state switch, 112, connects the write, head, 113, to an energising source via an analogue switch, 114. The document is again read and the read head, 101, is arranged to lead the write head, 113, so that the flux transitions are detected before the application of the d.c. erase field by the write head, 113. Any previously cancelled regions, indicated at H in figure 3a, for example, are intially read and as described above the monostable, 104, generates a level output signal, L. However, when an uncancelled region is detected, the monostable, 104, again generates a series of pulses and each positive going pulse, I and II in Figure 3e is detected by the main counter until the number of received pulses equals the number held in the counter, two in this case. In this case when the second pulse, II, is received the counter generates a pulse, EQUAL, which causes the analogue switch, 114, to open thereby disconnecting the write head from its energising source so preventing any further d.c. magnetisation. The signal which is applied to energise the write head is of the form shown in Figure 3f.

If the document is subsequently reread the presence of the additional high frequency signal in the output from head, 101, indicates that the units, $C_1$ and $C_2$, have been cancelled, as is shown in Figure 3g.

Additional security features may also be incorporated in the reading arrangement. When the magnetic particles in the layer, 15, of the document, are magnetised solely along their respective alignment directions, the difference between the levels of remanent magnetisation in neighbouring regions (which are differently aligned) is altered by cancellation of a unit, a smaller difference signal being observed following the cancellation of a region by the application thereto of a d.c. magnetising field. As described in our UK PA No. 51625/76 the difference in the remanent magnetisation of neighbouring regions can be changed in this manner by a factor of between 2 and 3, for example. This change in the difference signal can be detected by the use of a comparator which is set to detect the higher difference signal generated at the output from the reader, 100. The number of signals so generated should be in agreement with the number detected by the counter, 106, and displayed by unit, 109, using the techniques described above.

It will also be apparent that the sense of each signal generated by the read head, 101, is dependent on the sense of the d.c. magnetising field applied by the write head, 113. The strength and direction of the magnetising field, therefore, can be chosen to reverse the direction of the remanent magnetisation in the uncancelled regions, 17 and 18, so that the polarity of the subsequently detected flux changes in the affected regions is reversed. Following the cancellation of a unit or units, therefore, the detection of this polarity change provides an additional verification feature.

A visual on card indication of the decremented value can also be provided. Thus, for example, the residual value of the document, following each cancellation of a unit or units can be printed or embossed in an area of the card provided for the purpose, and to conserve card space it may be acceptable to indent only the last digit of the residual value.

In an alternative form a narrow track, 20, may be provided adjacent to the magnetic track which can be suitably marked (eg. by printing, punching or embossing) as cancellation takes place on the magnetic track. Optical or displacement detection of this ancilliary track can then be used to provide a further security feature.

In a preferred arrangement a dual gap head is used to provide both the read and write facilities and their respective gaps are spaced by a distance which is considerably less than the width of a region, 17 or 18. In an alternative arrangement, of course, separate heads may be provided which may be spaced apart by a distance greater than the width of a region. In this case it is necessary to apply a suitable delay to the pulse

EQUAL to ensure that the cessation of the energising signal to the write head, 13, occurs at the correct instant in time. In the described arrangement a reversible transport is used to move the document over the read and write read gaps. During a first pass (from right to left, say) the document is read and its current value is determined, and displayed by the display unit, 109, as described above. The drive to the transport is then reversed and the write head is turned on so that a dc magnetising field is applied to the document during at least a part of the second pass (from left to right, say). The document is inserted into the transport means in such a way that during the second pass the d.c. magnetising field is initially applied to any region which has already been cancelled. The d.c. magnetising field is removed once the desired number of unmagnetised regions has been detected and magnetised to achieve their cancellation. Because the direction of the drive is reversed, however, during the second pass it is necessary to interchange the leads to the read head, 101, to maintain consistency between the signals generated during the two passes. Other arrangements will apparent to persons skill in the art, and in particular a undirectional transport drive may be provided. In this case the initial read and the write stages can be achieved in separate undirectional passes through the transport, and it is not then necessary to reverse the connections to the read head.

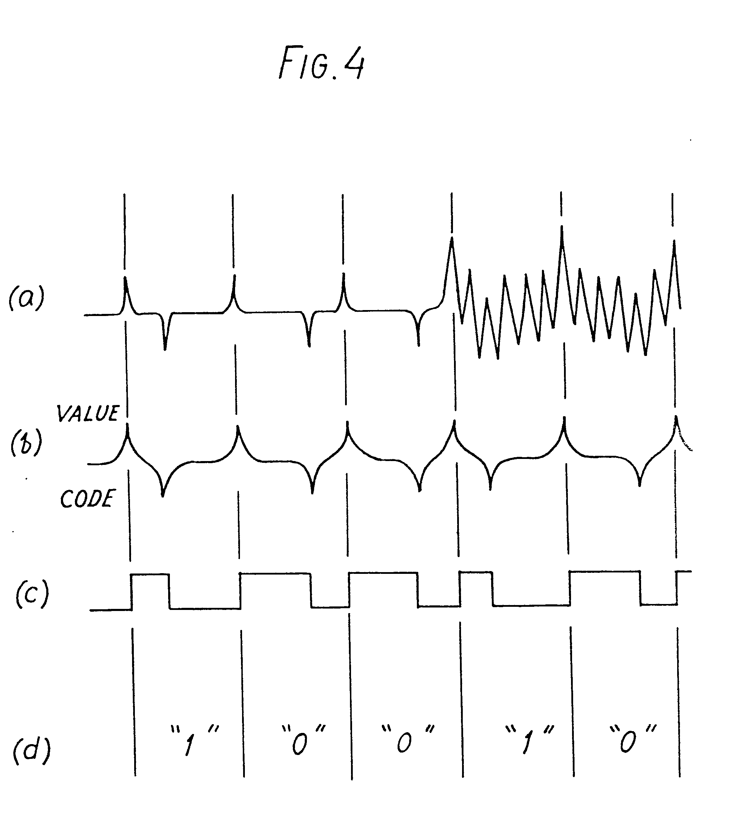

In the above-described example of the present invention only the positive going signals are used to denote the boundary between adjacent units of value and so a conventional pulse code modulation scheme, as indicated in Figure 4, can conveniently be used to also provide coded security information, which is indicated by a variation in the position of the negative going signals.

Using this coding scheme, a typical output signal from the amplifier, 102, is shown in Figure 4a, the higher frequency signals indicating that the last two units have been cancelled. To derive the coded security information the output from, 102, is passed to an active filter, 115, which, as shown in Figure 4b, removes the high frequency signals. The filtered signal is then passed to a comparator, 116, to generate the signals, of Figure 4c, which can be decoded at, 117, to reveal the security information.

It will be appreciated that the signal, EQUAL, which signifies that cancellation has occured, can also be used to permit the operation of an apparatus or machine, to supply a quantity of petrol or money or permit access to a secure area etc. Furthermore the verification information decoded at, 117, may be compared with expected information, which may have to be supplied by the user, via a keyboard, say, and a signal may be generated following a successful comparision, this signal again being used to permit operation of an apparatus. The other security features described above can similarly be used to provide an authorisation signal.

The described arrangment provides a system whereby a document may be selectively cancelled by the non destructive progressive erasure of a security feature which is difficult if not impossible to reinstate. This non destructive cancellation avoids the short comings of the destructive tehchiques used hitherto.

What we claim is:-

1.      A secure document system comprising a secure document (10),
including a magnetic material, for representing discrete units of
value and an apparatus (FIG 2) suitable for cancelling one or more
of said units by application thereto of a d.c. magnetising field
characterised in that the secure document (10) comprises a layer
(15) of anisotropic magnetic particles dispersed in, and retained by
a binder, particles in first spaced parts (17) of the layer being
fixedly aligned along a first direction and particles in remaining
parts (18) of the layer being unaligned, or being aligned along a
different direction, which layer is magnetised so that a change of
remanent magnetisation occurs at the transition between each pair of
adjacent first and remaining parts (17, 18), the region between
preselected said transitions representing a unit of value and the
magnetised layer (15) also including, at a surface thereof, spaced
markings (19) of a magnetic material at least one of said markings
being located between each pair of adjacent preselected transitions,
the system being further characterised in that said apparatus
comprises a reader means (100) for detecting changes of remanent
magnetisation along the document and for generating first signals
indicative thereof, means (104) for receiving a said first signal
and for generating a further signal whenever consecutive first
signals are generated by said preselected transitions thereby
indicating that the intervening region is uncancelled, and writer
means (103) and an associated control means (106) responsive to said
further signals for magnetising a preselected number of said
uncancelled regions to thereby effect their cancellation.

2.      A secure document system according to Claim 1 wherein each
said part represents a unit of value.

3.      A secure document system according to Claim 1 wherein each
successive pair of adjacent parts represents a unit of value.

4.      A secure document system according to any one of Claims 1
to 3 wherein said parts are of substantially the same size and shape.

5.      A secure document system according to Claims 1 to 4 wherein
the markings are elongate strips.

6.      A secure document system according to Claims 1 to 5 wherein
the anisotropic magnetic particles are ɣ ferric oxide, or barium
ferrite or iron powder.

7.      A secure document system according to Claims 1 to 6 wherein
said first and different directions are inclined orthogonally.

8.      A secure document sytstem according to Claims 1 to 7
wherein the means for generating said further signals is a
monostable circuit which is triggered to generate a pulse whenever
the interval between consecutively received signals equals the
interval between adjacent preselected transitions or differs
therefrom by less than the spacing of the markings.

9.      A secure document according to Claim 8 wherein the control
means is a counter means for permitting energisation of the writer
means until a preset number of said pulses has been received, to
thereby cancel the units of value corresponding thereto.

10.     A secure document system according to Claims 1 to 9 wherein
the particles aligned along said first direction are substantially
solely magnetised along said first direction and the particles
aligned along said different direction are substantially solely
magnetised along said different direction, the said apparatus
including a comparator means, connected to the output of said reader
means, for detecting a change in the level of remanent magnetisation
of a unit before and after magnetisation and for providing an
indication of said change.

11.     A secure document comprising a magnetic material, for
representing descrete units of value characerised in that the
secure document (10) comprises a layer (15) of anisotropic magnetic
particles dispersed in, and retained by a binder, particles in first
spaced parts (17) of the layer being fixedly aligned along a first
direction and particles in remaining parts (18) of the layer being
unaligned, or being aligned along a different direction, which layer
is magnetised so that a change of remanent magnetisation occurs at
the transition between each pair of adjacent first and remaining
parts (17, 18), the region between preselected transitions
representing a unit of value and the magnetised layer (15) including
at a surface thereof, spaced markings (19) of a magnetic material at
least one of said markings being located between each pair of
adjacent preselected transitions.

## FIG. 1a

## FIG. 1b

FIG.2

# FIG. 3

# FIG.4

(a)

VALUE

(b)

CODE

(c)

(d)  "1"   "0"   "0"   "1"   "0"

0024800

**European Patent Office**

**EUROPEAN SEARCH REPORT**

Application number

EP 80 30 2398.5

| Category | Citation of document with indication, where appropriate, of relevant passages | Relevant to claim |
|---|---|---|
| | GB - A - 1 544 628 (EMI)<br>* claims 1 and 3, page 1, lines 73 to 86; fig. 2 * | 1,5 |
| | GB - A - 1 466 329 (MINNESOTA)<br>* claims 1 and 2; page 3, lines 21 to 31, lines 103 to 106 * | 6 |
| | DE - A - 2 060 655 (FUJI)<br>* claims 1 and 2 * | 6 |
| D,A | GB - A - 1 331 604 (EMI)<br>* complete document * | |

## DOCUMENTS CONSIDERED TO BE RELEVANT

**CLASSIFICATION OF THE APPLICATION (Int. Cl.)**

G 11 B 5/70
G 11 B 5/84
G 06 K 19/08

**TECHNICAL FIELDS SEARCHED (Int.Cl.)**

G 06 K 19/08
G 11 B 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 18-11-1980 | LEITHÄUSER |

EPO Form 1503.1  06.78